# EUROPÄISCHE PATENTSCHRIFT

(11) **EP 1 419 186 B1**
(45) Veröffentlichungstag und Bekanntmachung des Hinweises auf die Patenterteilung: **16.02.2005**
(21) Anmeldenummer: 02796223.2
(22) Anmeldetag: 13.08.2002
(51) Int. Cl.: C08F 10/02

(54) **VERFAHREN ZUR HOCHDRUCKPOLYMERISATION VON ETHYLEN**
METHOD FOR HIGH PRESSURE POLYMERIZATION OF ETHYLENE
PROCEDE DE POLYMERISATION HAUTE PRESSION D'ETHYLENE

(30) Priorität: 20.08.2001 DE 10139374
(43) Veröffentlichungstag der Anmeldung: 19.05.2004
(73) Patentinhaber: Basell Polyolefine GmbH, 50389 Wesseling (DE)
(72) Erfinder: DECKERS, Andreas, 55234 Flomborn (DE); MÄHLING, Frank-Olaf, 68167 Mannheim (DE); GROOS, Georg, 67125 Dannstadt-Schauernheim (DE); KÖHLER, Gernot, 53340 Meckenheim (DE); WEBER, Wilhelm, 67435 Neustadt (DE)
(86) Internationale Anmeldenummer: PCT/EP2002/009033
(87) Internationale Veröffentlichungsnummer: WO 2003/018646

(56) Entgegenhaltungen:
- US-A- 3 842 060

## Beschreibung

Die vorliegende Erfindung betrifft ein Verfahren zur Polymerisation von Ethylen und optional weiteren Monomeren in einem Hochdruckreaktor bei Drücken zwischen 1000 und 4000 bar und Temperaturen zwischen 120 und 350°C, unter intermittierender Zugabe von Wasserstoff und damit herstellbare Ethylenhomopolymerisate und -copolymerisate.

Hochdruckpolymerisationsverfahren zur Herstellung von Polyethylen und Ethylencopolymeren sind seit langem bekannt (Ullmann's Encyclopädie der technischen Chemie, 4. Auflage, Bd. 19/1980/S.169-178). Besonders verbreitet sind solche Verfahren, die in Hochdruckröhren-Reaktoren durchgeführt werden. Solche Verfahren werden beispielsweise in EP-A-449092, EP-A-394794, EP-B-567818 und DE-A-4102808 beschrieben. Die Qualität der erzielten Produkte und insbesondere der Umsatz solcher Hochdruckpolymerisationsverfahren ist unter anderem durch die Effektivität der Wärmeabfuhr der exothermen Polymerisationsreaktion begrenzt, wobei der erzielbare Umsatz in der Regel ansteigt, je höher die abgeführte Wärmemenge ist. Ein Teil der bei der Polymerisation entstehenden Wärmemenge wird dabei über die Reaktorwände abgeführt und kann dort z.B. an ein Kühlmedium abgegeben werden. Ein häufig auftretendes Problem ist, dass sich selbst bei hohen Temperaturen und hohen Drücken an den gekühlten Reaktorinnenwänden hochmolekulare polymerreiche Strömungsgrenzschichten oder gar Polymerbeläge aufbauen. Da Polyethylen ein schlechter Wärmeleiter ist, wird dadurch der Wärmedurchgang und somit eine effektive Wärmeabfuhr drastisch verringert. Bei ungenügender Wärmeabfuhr kann sich aber das Ethylen als Folge der Temperaturerhöhung zersetzen. Ausserdem wird der Umsatz durch diese polymerreichen Strömungsgrenzschichten oder Polymerablagerungen stark verringert. Um dies zu vermeiden wurden verschiedenste Polymerisationsverfahren mit speziellen Temperaturprofilen entwickelt. Die Verfahren sind jedoch meist aufwendig und oftmals mit erhöhten Kosten verbunden.

Der vorliegenden Erfindung lag die Aufgabe zugrunde, ein Verfahren zur Hochdruckpolymerisation von Ethylen zu entwickeln, welches kostengünstig ist und in welchem der Umsatz erhöht ist.

US 3,842,060 beschreibt ein Verfahren zur Polymerisation von Ethylen in einem Röhrenreaktor, in den kontinuierlich Wasserstoff in einer Menge von 10 bis 150 ppm, bezogen auf das Volumen des Monomerstromes, während der Polymerisation eingeleitet wird. Dadurch werden Polymerablagerungen während der Polymerisation vermieden und der Umsatz erhöht. Nachteilig ist jedoch, dass während der Polymerisation ein Teil des Ethylens zu Ethan hydriert wird.

Es wurde nun gefunden, dass die Erhöhung des Umsatzes auch noch nach Beendigung der Wasserstoffzugabe anhält. Der Wasserstottverbrauch, sowie der Anteil an Ethan, welches durch die Hydrierung von Ethen entsteht, konnte dadurch vermindert werden.

Demgemäß wurde ein Verfahren zur Polymerisation von Ethylen und optional weiteren Monomeren in einem Hochdruckreaktor bei Drücken zwischen 1000 und 4000 bar und Temperaturen zwischen 120 und 350°C gefunden, dadurch gekennzeichnet, dass man intermittierend Wasserstoff in den Reaktor einbringt.

Das erfindungsgemäße Verfahren lässt sich sowohl für die Homopolymerisation als auch für die Copolymerisation von Ethylen mit einem oder mehreren anderen Monomeren verwenden, unter der Voraussetzung, dass diese Monomeren unter Hochdruck mit Ethylen radikalisch copolymerisieren. Beispiele geeigneter copolymerisierbarer Monomere sind α,β-ungesättigte C₃- bis C₈-Carbonsäuren, insbesondere Maleinsäure, Fumarsäure, Itaconsäure, Acrylsäure, Methacrylsäure und Crotonsäure, Derivate der α,β-ungesättigten C₃- bis C₈-Carbonsäuren, wie z.B. ungesättigte C₃- bis C₁₅-Carbonsäureester, insbesondere Ester von C₁-C₆-Alkanolen, oder -anhydride, insbesondere Methacrylsäuremethylester, Methacrylsäureethylester, Methacrylsäure-n-butylester oder Methacrylsäure-tert.-butylester, Acrylsäuremethylester, Acrylsäureethylester, Acrylsäure-nbutylester, Acrylsäure-2-ethylhexylester, Acrylsäure-tert.-butylester, Methacrylsäureanhydrid, Maleinsäureanhydrid oder Itaconsäureanhydrid und α-Olefine, wie Propen, 1-Buten, 1-Penten, 1-Hexen, 1-Octen oder 1-Decen. Außerdem können Vinylcarboxylate, besonders bevorzugt Vinylacetat als Comonomer verwendet werden. Besonders vorteilhaft werden als Comonomer Acrylsäure-n-butylester, Acrylsäure oder Methacrylsäure eingesetzt. Der Anteil an Comonomer bzw. Comonomeren im Reaktionsgemisch beträgt 1 bis 45 Gew.-%, bevorzugt 3 bis 30 Gew.-% bezogen auf die Menge an Ethylen.

Bei dem erfindungsgemäßen Verfahren kann die Polymerisation durch einen oder mehrere Initiatoren gestartet werden. Als Initiatoren kommen z.B. Luft, Sauerstoff, Azoverbindungen oder peroxidische Polymerisationsinitiatoren in Betracht. Insbesondere die Initiierung mit organischen Peroxiden stellt eine bevorzugte Ausführungsform des erfindungsgemäßen Verfahrens dar. Beispiele geeigneter organischer Peroxide, sind Peroxyester, Peroxyketale, Peroxyketone, und Peroxycarbonate, wie z.B. Di-(2-ethylhexyl)peroxydicarbonat, Dicyclohexyl-peroxydicarbonat, Diacetyl-peroxydicarbonat, tert.-Butylperoxyisopropylcarbonat, Di-tert.-butylperoxid, Di-tert.amylperoxid, Dicumylperoxid, 2,5-Dimethyl-2,5-di-tert.-butylperoxyhexan, tert.-Butylcumylperoxid, 2,5-Dimethyl-2,5-di(tert.-butylperoxy)-hex-3-in, 1,3-Diisopropylmonohydroperoxid oder tert.-Butylhydroperoxid, Didecanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.Butylperoxydiethylacetat, tert.-Butylperoxydiethylisobutyrat, 1,1-Di-(tert.-butylperoxy)-3,3,5-trimethylcyclohexan, 1,1-Di-(tert.-butylperoxy)-cydohexan, tert.-Butylperoxacetat, Cumylperoxyneodecanoat, tert.-Amylperoxyneodecanoat, tert.-Amyl-peroxypivalat, tert.-Butylperoxyneodecanoat, tert.-Butyl-permaleinat, tert.-Butyl-peroxypivalat, tert.-Butyl-peroxyisononanoat, Diisopropylbenzolhydroperoxid, Cumolhydroperoxid, tert.-Butyl-peroxybenzoat, Methylisobutylketonhydroperoxid, 3,6,9-Triethyl-3,6,9-trimethyl-triperoxocyclononan oder 1,1-Di-(tert.butylperoxy)-butan. Auch Azodicarbonsäureester, Azodicarbonsäuredinitrile, wie z.B. Azobisisobutyronitril sowie radikalisch zerfallende Kohlenwasserstoffe, welche auch als C-C-Starter bezeichnet werden, wie z.B. 1,2-Diphenyl-1,2-dimethyl-ethan- und 1,1,2,2-Tetramethyl-ethan-Derivate, sind geeignet. Dabei können sowohl einzelne Peroxide als bevorzugt auch Gemische verschiedener Peroxide zum Einsatz kommen.

Peroxide sind in großer Auswahl kommerziell erhältlich, beispielsweise die Trigonox® oder Perkadox®-Marken der Akzo Nobel.

In einer bevorzugten Ausführungsform des erfindungsgemäßen Verfahrens werden als peroxidische Polymerisationsinitiatoren solche mit einer relativ hohen Zerfallstemperatur eingesetzt. Als geeignete peroxidische Polymerisationsinitiatoren kommen beispielsweise 1,1-Di(tert.-Butylperoxy)cyclohexan, 1,1-Di(tert.-Butylperoxy)butan, tert.-Butylperoxy-3,5,5-trimethylhexanoat, tert.-Butylperoxybenzoat, 2,5-Dimethyl-2,5-di-tert.-butylperoxyhexan, tert.-Butylcumylperoxid, Di-tert.-Butylperoxid und 2,5-Dimethyl-2,5-di(tert.-butylperoxy)-hex-3-in in Betracht, besonders bevorzugt wird Di-tert.-Butylperoxid eingesetzt.

Die Initiatoren können einzeln oder als Gemisch in Konzentrationen von 0,5 bis 100 ppm und insbesondere 0,5 bis 50 ppm, bezogen auf die Monomermenge, angewandt werden. Hierbei ist es oftmals von Vorteil, die Initiatoren im gelösten Zustand zu verwenden. Beispiele geeigneter Lösungsmittel sind aliphatische Kohlenwasserstoffe, insbesondere Octan und Isododecan. Die Lösungen enthalten die Peroxidmischungen in Anteilen von 2 bis 65 Gew.-%, bevorzugt von 5 bis 40 Gew.-% und besonders bevorzugt von 10 bis 30 Gew.-%.

Bei dem erfindungsgemäßen Verfahren kann die Molmasse der darzustellenden Polymerisate wie üblich durch Zugabe von Molekulargewichtsreglern kontrolliert werden. Beispiele geeigneter Regler sind aliphatische und olefinische Kohlenwasserstoffe, wie z.B. Pentan, Hexan, Cyclohexan, Propen, 1-Penten oder 1-Hexen, Ketone, wie z.B. Aceton, Methylethylketon (2-Butanon), Diethylketon oder Diamylketon, Aldehyde, wie z.B. Formaldehyd, Acetaldehyd oder Propionaldehyd und gesättigte aliphatische Alkohole, wie z.B. Methanol, Ethanol, Propanol oder Butanol. Besonders bevorzugt werden gesättigte aliphatische Aldehyde, insbesondere Propionaldehyd oder α-Olefine, wie Propen oder 1-Hexen eingesetzt. Der Molekulargewichtsregler wird vorzugsweise dem Reaktionsgemisch vor dem Rohrreaktor zudosiert. Er kann auch zusammen mit dem Polymerisationsinitiator an ein oder mehreren Stellen entlang eines Rohrreaktors zudosiert werden.

Das erfindungsgemäße Verfahren wird üblicherweise bei Drücken von 1000 bis 4000 bar durchgeführt, wobei Drücke von 1800 und 3500 bar bevorzugt und Drücke von 2000 bis 3300 bar besonders bevorzugt sind. Die Temperaturen liegen in der Regel in einem Bereich von 120 und 350°C, bevorzugt von 150 bis 340°C, und ganz besonders bevorzugt von 160°C bis 320°C, wobei bei der Copolymerisation von Ethylen mit empfindlichen oder stark regelnden Comonomeren, insbesondere von Carbonsäure-Estern, vorzugsweise bei Temperaturen unter 230°C polymerisiert wird.

Allgemein ist ein Verfahren bevorzugt, welches dadurch gekennzeichnet ist, dass die Polymerisationstemperatur nicht höher als 310°C ist.

Das strömende Reaktionsgemisch enthält in der Regel Polyethylen in einer Menge im Bereich von 0 bis 45 Gew.-%, bezogen auf das Gesamtgewicht der Monomere, üblicherweise bis 40 Gew.-%.

Der Wasserstoff wird intermittierend in den Reaktor eingebracht, d.h. Phasen mit Wasserstoffzugabe zum Hochdruckreaktor und Phasen ohne Wasserstoffzugabe wechseln sich nacheinander ab. Eine vorteilhafte Ausführungsform des erfindungsgemäßen Verfahrens ist dadurch gekennzeichnet, dass man den Wasserstoff 10 Sekunden bis 5 Stunden, bevorzugt 1 Minute bis 1 Stunde und besonders bevorzugt 2 Minuten bis 20 Minuten in den Reaktor einbringt und anschliessend den Reaktor ohne Zugabe von Wasserstoff betreibt, üblicherweise über einen Zeitraum von der 1- bis 50-fachen, bevorzugt der 2- bis 30-fachen und besonders bevorzugt der 5- bis 15-fachen Zeit der Wasserstoffzugabe. Diese Phasen mit und ohne Wasserstoffzugabe können in konstantem Wechsel betrieben werden. Dabei können auch unterschiedlich lange Phasen mit Wasserstoffzugaben und/oder ohne Wasserstoffzugabe hintereinander folgen. Bevorzugt sind die Phasen mit Wasserstoffzugabe innerhalb einer Produkteinstellung jeweils gleich lang. Das gleiche gilt für die Phasen ohne Wasserstoffzugabe innerhalb einer Produkteinstellung untereinander.

Eine bevorzugte Ausführungsform des erfindungsgemäßen Verfahrens ist dadurch gekennzeichnet, dass die maximale Konzentration des Wasserstoffes, bezogen auf die dosierte Ethylenmenge, im Reaktor in einem Bereich von 0,1 bis 5000 ppm liegt. Insbesondere geringere Mengen an Wasserstoff zeigen bereits einen optimalen Effekt. In einer vorteilhafte Ausführungsform werden daher von 1 bis 2000 ppm Wasserstoff, bevorzugt von 1 bis 1000 ppm Wasserstoff und besonders bevorzugt von 10 bis 300 ppm Wasserstoff, jeweils bezogen auf die Ethylenmenge, eingespeist. Besonders bevorzugt wird in dieser Ausführungsform über vergleichsweise kurze Zeiträume von kleiner 20 Minuten intermittierend Wasserstoff eingespeist.

Das erfindungsgemäße Verfahren kann in allen üblichen Hochdruckreaktoren durchgeführt werden. Da die Belagsbildung insbesondere bei Hochdruck-Rohrreaktoren infolge der großen Reaktoroberfläche dieser Reaktoren besondere Bedeutung hat, ist das erfindungsgemäße Verfahren besonders vorteilhaft in Hochdruck-Rohrreaktoren einsetzbar.

Unter Rohrreaktoren versteht man rohrförmige Polymerisationsgefäße, deren Verhältnis Längezu-Durchmesser der druckfesten Reaktorrohre im allgemeinen im Bereich 10 000 bis 60 000 : 1, besonders bevorzugt von 15 000 bis 35 000 liegt. In jedem Fall haben diese röhrenförmigen Reaktoren ein Länge-zu-Durchmesser-Verhältnis von > 1000. Angaben über Ethylenhochdruck-Polymerisationsverfahren, bei denen Rohrreaktoren benutzt werden, finden sich beispielsweise in "Ullmanns Enzyklopädie der technischen Chemie", 1980, 4. Auflage, Band 19, S. 167-178, Verlag Chemie GmbH, 6940 Weinheim.

Dabei können alle bekannten Reaktortypen eingesetzt werden, also z.B. Reaktoren mit oder ohne Kaltgaseinspeisung, Reaktoren mit Druckwasserkühlung, die auch segmentiert sein kann, usw., wie sie dem Fachmann bekannt sind.

In einer bevorzugten Ausführungsform wird entlang des Rohrreaktors an mehreren Stellen, z.B. 2 bis 6 Stellen Polymerisationsinitiator zudosiert, so dass 2 bis 6 Reaktionszonen entstehen. Als Reaktionszone wird die Zone beginnend mit der Initiatorzudosierung bis vor die nächste Initiatorzudosierung bezeichnet. Bevorzugt wird an 2 bis 5 Stellen Polymerisationsinitiator zudosiert.

Das Monomer und/oder Comonomer kann in einem oder mehreren Schritten zudosiert werden. In einem bevorzugten Verfahren wird hierbei die gesamte Menge an Monomer und gewünschtenfalls Comonomer am Reaktoreingang zudosiert. Ein weiteres bevorzugtes Verfahren ist dadurch gekennzeichnet, dass der Rohrreaktor mindestens zwei Reaktionszonen besitzt und man zusätzlich gekühltes oder vorgewärmtes Monomer und/oder gekühltes oder vorgewärmtes Comonomer als Frischgasstrom vor oder zu Beginn jeder Reaktionszone zudosiert (Mehrfachkaltgaseinspeisung). Dabei wird bevorzugt über 50% der Gesamtmenge an Monomer und optional des Comonomers am Reaktoreingang zudosiert. Durch die Zugabe von weiterem Monomer kann die Fließgeschwindigkeit erhöht und damit zusätzlich die Bildung von Belägen vermieden werden. Die Zudosierung des oder der Monomeren kann dabei vor der Neudosierung des Initiators oder zusammen mit dem Initiator erfolgen. Bevorzugt sind mindestens zwei aufeinanderfolgende Reaktionszonen, wobei die Polymerisation in jeder Stufe durch Zugabe der entsprechenden Initiatoren wieder neu gestartet wird.

Für die Durchführung eignen sich u.a. Rohrreaktoren, welche mit einer Reihe von Einlassstellen für den Initiator sowie gegebenenfalls für die Zufuhr weiterer Monomermengen versehen sind. Im allgemeinen weist der Rohrreaktor ein Verhältnis von Länge zu Durchmesser von mindestens 10 000:1, vorzugsweise von mehr als 15 000:1, bei einer Länge von 120 bis 2500 m auf. Vorteilhafterweise ist der Rohrreaktor in gewundener Form angeordnet:

Auch Rohrreaktoren, worin jede Reaktionszone, von der Initiatordosierung bis zum Temperaturmaximum einen vergleichsweise geringeren Rohrdurchmesser bezogen auf den vergrößerten Rohrdurchmesser in der daran anschließenden Kühlzone (vom Temperaturmaximum bis zur nächsten Initiatordosierung) besitzen, können mit dem erfindungsgemäßen Verfahren betrieben werden. Dadurch kann ein hoher Umsatz bei relativ geringem Druckabfall über die Länge des Reaktors erreicht werden. Derartige Reaktoren sind beispielsweise in US-4,135,044 und US-4,175,169 beschrieben. Auch eine Kombination des erfindungsgemässen Verfahrens mit den Reaktoren und Verfahren, welche in der WO 01/85807 beschrieben sind, ist möglich.

Im allgemeinen liegt die mittlere Verweilzeit des Reaktionsgemischs im Rohrreaktor zwischen 30 und 300, insbesondere zwischen 60 und 180 Sekunden.

Das erfindungsgemäße Verfahren kann in analoger Weise auch mit Vorschalten eines Reaktors mit Rückvermischung durchgeführt werden. Nach dem Abklingen der Polymerisation im Rückvermischer wird das Polymerisationsgemisch zusammen mit noch unverbrauchten Monomeren durch ein Hochdruckrohr, welches gegebenenfalls noch mit einem Wärmeaustauscher verbunden ist, in den Rohrreaktor eingebracht, wo das Verfahren, wie vorstehend beschrieben, weitergeführt wird. Im allgemeinen beträgt die mittlere Verweilzeit des Gemisches im Reaktor mit Rückvermischung 10 bis 100, insbesondere 10 bis 30 Sekunden, im Rohrreaktor 10 bis 200, insbesondere 30 bis 120 Sekunden.

Der Wasserstoff kann entweder nur am Eingang des Reaktors eingespeist werden oder auch an verschiedenen Stellen entlang des Reaktors. So kann der Wasserstoff beispielsweise zusammen mit dem/den Monomeren eingespeist werden oder aber auch an den Stellen, an denen Initiator in den Reaktor injiziert wird. Bevorzugt wird der Wasserstoff zusammen mit dem/den Monomeren zudosiert. In einer bevorzugten Ausführungsform wird die gesamte Menge an Wasserstoff im Verdichterbereich mit frischem Monomer vermischt, das Gemisch verdichtet und anschliessend dem Reaktor zugeführt.

Die optimale Konzentration an Wasserstoff in dem Reaktor hängt allerdings von den jeweiligen Druck- und Temperaturbedingungen sowie von der Reaktorgeometrie, dem Material aus dem die Innenwände des Reaktors hergestellt sind und der Durchflußgeschwindigkeit durch den Reaktor ab. Für den jeweiligen Reaktor und die gewünschten Polymerisationsbedingungen ist es daher oftmals günstiger die optimale Konzentration an Wasserstoff jeweils zu ermitteln. Dies ist für den Fachmann leicht zu bewerkstelligen. Üblicherweise beginnt man bei konstanten Polymerisations-Parametern, zunächst sehr geringe Mengen an Wasserstoff in den Reaktor einzuspeisen. Durch geeignete Temperatur-Messeinrichtungen wird dann die Temperaturdifferenz zwischen Reaktor-Innenraum und der Außenoberfläche des Druckrohres, vorzugsweise an mindestens 2 aufeinanderfolgenden Positionen entlang des Reaktors bevorzugt innerhalb einer Reaktionszone, verfolgt und die Konzentration an Wasserstoff solange erhöht, bis einerseits ein maximaler Wärmeübergang erreicht wird, andererseits jedoch die gewünschte Produktqualität erreicht wird. Die Temperatur-Messstelle befindet sich bevorzugt in der Mitte und/oder zu Ende einer Polymerisationszone, da dort die Temperaturerniedrigung, bedingt durch das erfindungsgemässe Verfahren, besonders gut zu beobachten ist. Da auch der Umsatz erhöht wird, lässt sich auch dies als Parameter zur Regelung der Wasserstoffkonzentration verwenden.

Weiterhin hat sich ein Verfahren als besonders geeignet erwiesen, welches dadurch gekennzeichnet ist, dass man die Temperaturdifferenz zwischen dem Innenraum und der Außenoberfläche des Druckrohres misst und die Menge des in den Reaktor eingebrachten Wasserstoffes in Abhängigkeit von der so gemessenen Temperaturdifferenz regelt. Als Außenoberfläche ist im Allgemeinen der Kühlwassermantel des Reaktors zu verstehen. Ziel ist es, eine möglichst geringe Temperaturdifferenz zu erreichen, weil dies ein Indikator für eine nur wenig ausgeprägte polymerreiche Strömungsgrenzschicht oder Belagsschicht an der Innenoberfläche des Reaktors darstellt. Der Ort dieser Temperaturdifferenz-Messung hängt von der Fahrweise des Reaktors ab. Bei einfachen Reaktoren, bei denen der Monomerenstrom nur an einer Stelle am Eingang des Reaktors eingespeist wird, weist der Reaktor in der Regel ein einfaches Temperaturprofil auf, so dass eine Stelle zur Messung der Temperaturdifferenz ausreichend sein kann, wobei dies bevorzugt am Ende der Reaktionszone ist. Bei Reaktoren, bei denen an mehreren Stellen Initiator injiziert wird, und insbesondere bei Reaktoren, bei denen an mehreren Stellen Monomerkaltgas eingespeist wird, ist es vorteilhaft, die Messung der Temperaturdifferenz an mehreren Stellen des Reaktors vorzunehmen, insbesondere in der Mitte und/oder am Ende einer Polymerisationszone.

Des weiteren wurde gefunden, dass der beobachtete Effekt in Rohrreaktoren bestehend aus einem Stahl mit einem Nickelanteil, bzw. mit an den Innenwänden Nickel-beschichteten Rohrreaktoren besonders hohe Umsatzsteigerungen ermöglichen, bzw. längere Abstände zwischen den einzelnen Perioden der Wasserstoffzugabe möglich sind oder noch geringere Mengen an Wasserstoff benötigt werden um eine Umsatzerhöhung zu erreichen. In einer bevorzugten Ausführungsform ist der Hochdruckrohrreaktor daher an den Innenwänden mit Nickel beschichtet. Die Beschichtung kann dabei auf alle möglichen Arten erfolgen, wie beispielsweise chemisch, elekrolytisch oder durch Plattieren mit nachfolgender Autofrettage. Ein Verfahren zur chemischen Beschichtung mit Nickel ist beispielsweise in der WO 00/40775 beschrieben. In einer weiteren bevorzugten Ausführungsform besteht der Hochdruckrohrreaktor oder die Hochdruckreaktorinnenoberfläche aus einem Werkstoff mit einem Nickelanteil von 0,1 bis 100 Gew.-% und bevorzugt von 1 bis 50 Gew.% und besonders bevorzugt von 4 bis 30 Gew.-%. In einer bevorzugten Ausführungsform besteht der Hochdruckreaktor aus eine Stahl mit einem Nickelanteil von 1 bis 35 Gew.-%, bevorzugt von 1 bis 18 Gew.-% und besonders bevorzugt von 1 bis 10 Gew.-%. Die Zusammensetzung von Stählen ist beispielsweise in Ullmann, 6. Ausgabe, 2000 Electronic Release, Kapitel: Stähle beschrieben.

Nach der letzten Zudosierung des Polymerisationsinitiators wird das Reaktionsgemisch abgekühlt, um das Produkt ohne thermische Schädigung aus dem Reaktor austragen zu können. Das Reaktionsgemisch wird durch ein geeignetes Hochdruckentspannungsventil am Austrittsende des Röhrenreaktors ausgestoßen. Nach dem Austragen des Reaktionsgemischs wird das Polymerisat durch Entspannen von unverbrauchtem Ethylen und gegebenenfalls unverbrauchtem Comonomer getrennt, wonach man die Monomeren im allgemeinen in den Reaktor zurückführt.

Ein weiterer Gegenstand der Erfindung sind die Ethylenhomo- und Ethylencopolymere, welche nach dem erfindungsgemäßen Verfahren herstellbar sind.

Die Ethylenhomo- und Ethylencopolymere lassen sich mit dem erfindungsgemäßen Verfahren sicher und exakt reproduzierbar herstellen, ohne dass es in den Reaktoren zu einer thermischen Zersetzung der Monomere kommt. Die erfindungsgemäßen Polymerisate weisen Dichten von 900 bis 950 kg/m³, bevorzugt 912 bis 935 kg/m³ auf. Die Dichte kann z.B. über die Polymerisationstemperatur und den Polymerisationsdruck und/oder die Comonomerkonzentration beeinflusst werden. Ihr Schmelzflussindex gemäß MI gemessen nach ISO 1133 (190°C/2,16 kg) liegt im Bereich von 0,2 bis 1000 g/10 min, insbesondere ist er kleiner als 100 g/10 min und besonders bevorzugt kleiner als 40 g/10 min. Folien, welche aus den erfindungsgemäßen Polymerisaten hergestellt werden, weisen hervorragende optische Eigenschaften auf. In der vorstehend beschriebenen Weise ist es möglich, Polymerisate mit Dichten über 925 kg/m³ bei Umsätzen von mehr als 25 % herzustellen. Die nach dem erfindungsgemäßen Verfahren dargestellten Ethylenhomo- und -copolymerisate eignen sich besonders gut zur Darstellung von Spritzgussprodukten im Kosmetik-, Medizin- und Lebensmittelbereich, wie beispielsweise Ausgießhilfen und Enschweißverschlüsse von Kartonverpackungen oder Deckel von s.g. Kombiverpackungen. Gut lassen sich nach dem erfindungsgemäßen Verfahren Polyethylenwachse mit einem gewichtsgemittelten Molekulargewicht M_{w} von maximal 20000 g/mol, bevorzugt maximal 10000 g/mol und besonders bevorzugt maximal 7500 g/mol herstellen. Die Molekulargewichtsverteilung (M_{w}/Mₙ) liegt im Bereich von 2 bis 10. Die Schmelzpunkte liegen im Bereich von 60 bis 125°C, bevorzugt 80 bis 120°C. Aber auch zur Herstellung von höhermolekularem Polyethylen mit einem Molekulargewicht M_{w}, das höher ist als 20.000 g/mol, bevorzugt höher als 80.000 g/mol und besonders bevorzugt höher als 120.000 g/mol, ist das erfindungsgemäße Verfahren gut geeignet. Die Molekulargewichtsverteilung des nach dem erfindungsgemäßen Verfahren hergestellten höhermolekularen Polyethylen liegt im Bereich von 2 bis 20. Die Schmelzpunkte des nach dem erfindungsgemäßen Verfahren hergestellten höhermolekularen Polyethylen liegen im Bereich von 80 bis 135°C, bevorzugt 100 bis 125°C.

Eine Besonderheit des erfindungsgemäßen Verfahrens ist darin zu sehen, dass nur sehr geringe Mengen Wasserstoff verwendet werden und dadurch die Verfahrenskosten deutlich gesenkt werden. Trotz dieser geringen Mengen Wasserstoff wird eine deutliche Erhöhung des Umsatzes erzielt.

Außerdem hat das erfindungsgemäße Verfahren noch den Vorteil, dass ein stabiler Reaktorbetrieb bei ungewöhnlich hohen Maximaltemperaturen von bis zu 320°C aufrecht erhalten werden kann, ohne dass eine Zersetzungsneigung auftritt.

### Beispiele und Vergleichsversuche

Die Beispiele 1 bis 5 und Vergleichsversuch 1 (V1) wurden in einem röhrenförmigen Reaktor mit einer Länge von 450 m und einem Verhältnis von Länge zu Durchmesser von 29300 durchgeführt. Propionaldehyd wurde als Molmassenregler zur Erreichung des angestrebten Schmelzflussindex von 36 g/10min verwendet. Die gesamte Menge an Wasserstoff wurde jeweils zu Beginn des Rohrreaktors zugegeben. Die verwendete Menge Wasserstoff und die Zeit der Dosierung (jeweils zwischen dem Vergleichsbeispiel V1 und dem jeweiligen Beispiel X entspricht der Zeit) ist in Tabelle 1 angegeben.

Als Radikalstarter wurde ein Peroxidgemisch aus bis zu drei organischen Peroxiden (tief-, mittelund hochzerfallend) verwendet und mittels Hochdruckkolbenpumpen direkt den Einspeisestellen des Rohrreaktors zugeführt. Die Reaktionszonen waren jeweils in zwei separate, gekühlte Zonen unterteilt. Die Wassereintrittstemperatur in jeder Reaktionszone betrug 170°C. Der Reaktor ist in drei Reaktionszonen mit Längen von 170 m (Reaktionszone 1), 170 m (Reaktionszone 2) und 110 m (Reaktionszone 3) unterteilt. Das sauerstofffreie Ethylen (3,6 t/h) wurde in mehreren Stufen auf den jeweiligen Reaktionsdruck von 2250 bar komprimiert und zusammen mit dem Propionaldehyd der ersten Reaktionszone des Rohrreaktors zugeführt.

Die bei der Polymerisation freiwerdende Reaktionswärme wurde der Reaktionsmischung über einen Kühlmittelkreislauf entzogen. Das resultierende Polymerisat wurde in üblicher und bekannter Weise in dem Reaktor nachgeschalteten Abscheidern von nicht umgesetztem Ethylen und anderen niedermolekularen Verbindungen abgetrennt.

Es wurde jeweils ein Produkt mit einer Dichte (gemessen nach ISO 1183) von 0,922 g/cm³ und einem Schmelzflussindex MI (190°C/2,16) (gemessen nach ISO 1133) von 36 g/10min erhalten. Die Polymer- und Polymerisationsdaten sind in Tabelle 1 angegeben.

Es werden keine Polymerablagerungen im Reaktor beobachtet.

Die Durchführung der Reaktion bereitete keinerlei Schwierigkeiten und es kam auch nicht zu thermischen Zersetzungen des Ethylens. Zudem wurde eine Erhöhung des Umsatz beobachtet. Wegen seiner ausgezeichneten mechanischen und optischen Eigenschaften eignete sich das erfindungsgemäße Ethytenhomopolymerisat vorzüglich für die Herstellung von Spritzgussprodukten im Kosmetik-, Medizin- und Lebensmittelbereich.

### Verwendete Abkürzungen:

T RZ1 ein ist die Gastemperatur zu Beginn der Reaktionszone 1
T RZ1 max ist die maximale Gastemperatur in Reaktionszone 1
T RZ2 ein ist die Gastemperatur am Anfang der Reaktionszone 2
T RZ2 max ist die maximale Gastemperatur in Reaktionszone 2
T RZ3 ein ist die Gastemperatur zu Beginn der Reaktionszone 3
T RZ3 max ist die maximale Gastemperatur in Reaktionszone 3
T RZ3 aus ist die Gastemperatur am Ende der Reaktionszone 3
Prod.: Produktion
Umsatz: Produktion[t/h]Ethylendurchsatz[t/h]

Die in der Tabelle aufgeführten Produktparameter wurden nach folgenden Messmethoden entwickelt:
Dichte: nach ISO 1183
MI: Schmelzflussindex (190°C/2,16) nach ISO 1133

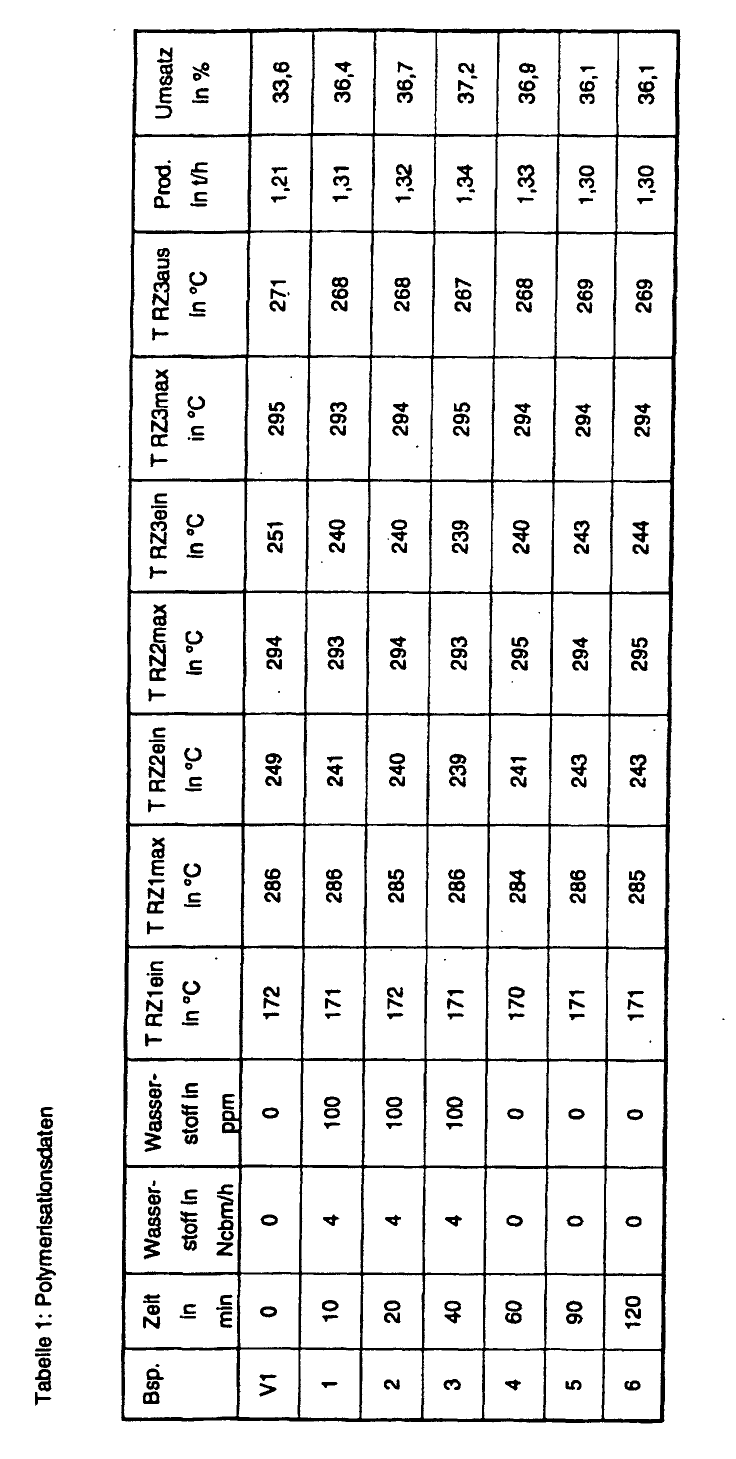

## Patentansprüche

1. Verfahren zur Polymerisation von Ethylen und optional weiteren Monomeren in einem Hochdruckreaktor bei Drücken zwischen 1000 und 4000 bar und Temperaturen zwischen 120 und 350°C, **dadurch gekennzeichnet, dass** man intermittierend Wasserstoff in den Reaktor einbringt.

2. Verfahren nach Anspruch 1, **dadurch gekennzeichnet, dass** die Polymerisation in einem röhrenförmigen Reaktor mit einem Länge zu Durchmesser-Verhältnis von > 1000 durchgeführt wird.

3. Verfahren nach Anspruch 1 oder 2, **dadurch gekennzeichnet, dass** man den Wasserstoff 10 Sekunden bis 5 Stunden in den Reaktor einbringt und anschließend den Reaktor ohne Zugabe von weiterem Wasserstoff über einen 1- bis 50-fachen Zeitraum bezogen auf die Zeit der Wasserstoffzugabe betreibt.

4. Verfahren nach den Ansprüchen 1 bis 3, **dadurch gekennzeichnet, dass** die Konzentration des Wasserstoffs, bezogen auf die Ethylenmenge im Reaktor, in einem Bereich von 0,1 bis 5000 ppm liegt.

5. Verfahren nach den Ansprüchen 1 bis 4, **dadurch gekennzeichnet, dass** man die Polymerisation durch Peroxide initiiert.

6. Verfahren nach den Ansprüchen 1 bis 5, **dadurch gekennzeichnet, dass** das Ethylen und optional weitere Monomere an mehreren verschiedenen Stellen des röhrenförmigen Reaktors in den Reaktor eingespeist werden.

7. Verfahren nach den Ansprüchen 1 bis 6, **dadurch gekennzeichnet, dass** der Druck im Reaktor zwischen 1800 und 3500 bar beträgt.

8. Verfahren nach den Ansprüchen 1 bis 7, **dadurch gekennzeichnet, dass** die Polymerisationstemperatur nicht höher als 310°C ist.

9. Verfahren nach den Ansprüchen 1 bis 8, **dadurch gekennzeichnet, dass** der Hochdruckreaktor aus einem Stahl mit einem Nickelanteil besteht.

10. Verfahren nach den Ansprüchen 1 bis 9, **dadurch gekennzeichnet, dass** der Hochdruckreaktor an den Innenwänden mit Nickel oder Nickel enthaltenden Subtanzen beschichtetet ist.

## Claims

1. A process for the polymerization of ethylene and optionally further monomers in a high-pressure reactor at from 120 to 350°C and pressures of from 1000 to 4000 bar, wherein hydrogen is intermittently introduced into the reactor.

2. A process as claimed in claim 1, wherein the polymerization is carried out in a tubular reactor having a length-to-diameter ratio of > 1000:1.

3. A process as claimed in claim 1 or 2, wherein the hydrogen is introduced into the reactor for from 10 seconds to 5 hours and the reactor is subsequently operated without addition of further hydrogen for a period of from 1 to 50 times the time of hydrogen addition.

4. A process as claimed in any of claims 1 to 3, wherein the concentration of hydrogen, based on the amount of ethylene in the reactor, is in a range from 0.1 to 5000 ppm.

5. A process as claimed in any of claims 1 to 4, wherein the polymerization is initiated by means of peroxides.

6. A process as claimed in any of claims 1 to 5, wherein ethylene and optionally further monomers are fed into the reactor at a plurality of points along the tubular reactor.

7. A process as claimed in any of claims 1 to 6, wherein the pressure in the reactor is from 1800 to 3500 bar.

8. A process as claimed in any of claims 1 to 7, wherein the polymerization temperature is not above 310°C.

9. A process as claimed in any of claims 1 to 8, wherein the high-pressure reactor is made of a nickel-containing steel.

10. A process as claimed in any of claims 1 to 9, wherein the interior walls of the high-pressure reactor are coated with nickel or nickel-containing substances.

## Revendications

1. Procédé de polymérisation d'éthylène et éventuellement d'autres monomères dans un réacteur sous haute pression, sous des pressions comprises entre 1000 bars et 4000 bars et à des températures comprises entre 120°C et 350°C, **caractérisé en ce que** l'on injecte par intermittence de l'hydrogène dans le réacteur.

2. Procédé selon la revendication 1, **caractérisé en ce que** l'on réalise la polymérisation dans un réacteur tubulaire ayant un rapport longueur/diamètre supérieur à 1000.

3. Procédé selon la revendication 1 ou 2, **caractérisé en ce que** l'on injecte de l'hydrogène dans le réacteur pendant une durée de 10 secondes à 5 heures et qu'on fait ensuite fonctionner le réacteur sans addition d'hydrogène supplémentaire pendant une durée 1 à 50 fois supérieure à la durée de l'addition d'hydrogène.

4. Procédé selon les revendications 1 à 3, **caractérisé en ce que** la concentration d'hydrogène, par rapport à la quantité d'éthylène dans le réacteur, va de 0,1 ppm à 5000 ppm.

5. Procédé selon les revendications 1 à 4, **caractérisé en ce que** l'on amorce la polymérisation avec des peroxydes.

6. Procédé selon les revendications 1 à 5, **caractérisé en ce que** l'on introduit l'éthylène et les autres monomères éventuels dans le réacteur en plusieurs points différents du réacteur tubulaire.

7. Procédé selon les revendications 1 à 6, **caractérisé en ce que** la pression dans le réacteur est comprise entre 1800 bars et 3500 bars.

8. Procédé selon les revendications 1 à 7, **caractérisé en ce que** la température de polymérisation ne dépasse pas 310°C.

9. Procédé selon les revendications 1 à 8, **caractérisé en ce que** le réacteur sous haute pression est fait d'un acier contenant une fraction de nickel.

10. Procédé selon les revendications 1 à 9, **caractérisé en ce que** le réacteur sous haute pression est revêtu, sur ses parois internes, avec du nickel ou des substances contenant du nickel.
